# FASCICULE DE BREVET EUROPEEN

(11) **EP 3 201 523 B1**
(45) Date de publication et mention de la délivrance du brevet: **03.03.2021**
(21) Numéro de dépôt: 15788459.4
(22) Date de dépôt: 16.09.2015
(51) Int. Cl.: B60R 19/48, B60R 19/52, F21S 43/20

(54) **VÉHICULE AUTOMOBILE AVEC UNE CALANDRE ET UN FEU DE SIGNALISATION**
KRAFTFAHRZEUG MIT EINEM KÜHLERGRILL UND EINER SIGNALLEUCHTE
VEHCILE WITH A RADIATOR GRILL AND A SIGNALING LAMP

(30) Priorité: 03.10.2014 FR 1459484
(43) Date de publication de la demande: 09.08.2017
(73) Titulaire: PSA Automobiles SA, 78300 Poissy (FR)
(72) Inventeur: PERON, Rodolphe, 95220 Herblay (FR); MOYNIER, Gilles, 72190 Sarge Les Le Mans (FR)
(86) Numéro de dépôt international: PCT/FR2015/052481
(87) Numéro de publication internationale: WO 2016/051043

(56) Documents cités:
- EP-A1- 1 757 857
- EP-A1- 2 481 635
- EP-A2- 1 577 162
- WO-A2-2013/075792
- DE-A1- 2 341 620
- DE-A1-102006 013 931
- DE-A1-102007 033 709
- DE-A1-102007 047 270
- DE-A1-102012 022 277
- JP-A- H07 201 209
- US-A- 4 305 116
- US-A- 4 588 619

## Description

### Domaine de l'invention

La présente invention concerne d'une manière générale le domaine des feux de signalisation pour véhicules automobiles.

### Arrière-plan de l'invention

Les feux de signalisation (feux de position, indicateurs de direction et feux de circulation diurnes) sont prévus pour émettre de la lumière en respectant une grille photométrique réglementaire qui impose le respect d'une plage d'intensité lumineuse spécifique pour chacun des points de cette grille.

En particulier, ces feux de signalisation doivent respecter des angles de visibilité géométrique qui déterminent la zone de l'angle solide minimal dans laquelle la surface apparente du feu doit être visible (Règlement ECE 48 2.13). Cette zone est déterminée par les segments d'une sphère dont le centre coïncide avec le centre de référence du feu et dont l'équateur est parallèle au sol. Ces segments sont déterminés à partir de l'axe optique du feu : les angles horizontaux correspondent à la longitude et les angles verticaux à la latitude. A l'intérieur de ces angles de visibilité géométrique, il ne doit pas y avoir d'obstacle à la propagation de la lumière à partir d'un point quelconque de la surface apparente du feu observée depuis l'infini. Ce règlement est particulièrement exigeant concernant les angles horizontaux que doivent respecter les feux de position et les indicateurs de direction, à savoir 45° côté interne et 80° côté externe.

Par ailleurs, la mode actuelle en matière de conception et d'implantation de ces feux de signalisation rend particulièrement difficile le respect de ces exigences réglementaires.

Ces derniers présentent ainsi de manière quasi-systématique un galbe important (leur inclinaison par rapport à un plan vertical transversal au véhicule variant de manière très conséquente d'une extrémité latérale à l'autre) afin d'épouser le retour d'aile du véhicule.

Ils ont également tendance et à être disposés en retrait de la calandre et du pare-choc de ce véhicule afin de répondre à des problématiques de sécurité (en cas de choc piéton, ce dernier ne doit pas venir en contact avec l'écran du feu avant la calandre ou le pare-choc) et de protection (cette disposition en retrait du feu réduisant de manière significative le risque de détérioration en cas de choc parking).

Afin de satisfaire les exigences réglementaires, les feux de signalisation doivent donc être pourvus d'éléments optiques tels que des stries ou des lentilles sphériques ou toriques (« billes ») disposées sur la surface interne de leur écran et capables d'étaler la lumière verticalement et/ou horizontalement.

Malheureusement, l'ajout de ces éléments optiques impacte négativement le rendu visuel du feu de signalisation.

### Objet et résumé de l'invention

La présente invention vise donc à proposer un véhicule automobile comportant une calandre dotée d'une pluralité de barreaux ainsi qu'au moins feu de signalisation satisfaisant aux exigences réglementaires et aux critères d'implantation actuels tout en présentant offrant un rendu visuel amélioré.

On connait notamment du document WO2013075792, un véhicule automobile comportant une calandre conforme au préambule de la revendication 1. Le véhicule automobile selon l'invention est caractérisé par la partie caractérisante de la revendication 1.

Le moulage bi-injection d'un premier polymère thermoplastique transparent et d'un second polymère thermoplastique translucide teinté permet d'améliorer le rendu final de la calandre du véhicule sans dégrader la photométrie du feu de signalisation.

En outre, et contrairement aux éléments optiques présents sur les feux de signalisation actuels, ces barreaux optiques ne dénaturent pas le rendu visuel mais participent au contraire à l'amélioration de celui-ci en s'intégrant de manière harmonieuse au véhicule. Ceci est notamment le cas lorsque le feu de signalisation selon l'invention est implanté de façon contigüe à la calandre avant du véhicule, le sablage des tranches avant des barreaux de l'écran leur donnant un effet mat renforçant la continuité visuelle avec les barreaux de la calandre.

Selon des caractéristiques préférées du véhicule selon l'invention, prises seules ou en combinaison :
- lesdits barreaux optiques s'étendent sur l'ensemble de la longueur dudit écran de couverture ;
- ledit écran de couverture est venu de moulage d'une seule pièce à partir d'un polymère thermoplastique transparent ;
- les faces supérieures et/ou inférieures desdits barreaux optiques de l'écran de couverture sont revêtues d'une couche de teinture ;
- certaines zones de ladite paroi principale situées entre deux dits barreaux optiques de l'écran de couverture sont revêtues d'une couche de teinture ;
- et/ou
- ledit feu de signalisation est un feu indicateur de direction.

Selon des caractéristiques préférées du véhicule, la largeur desdits barreaux optiques de l'écran de couverture est prédéterminée de sorte qu'une portion desdits barreaux optiques demeure visible depuis l'angle de visibilité géométrique réglementaire interne dudit feu de signalisation.

### Brève description des dessins

L'exposé de l'invention sera maintenant poursuivi par la description détaillée de plusieurs exemples de réalisation, donnée ci-après à titre illustratif mais non limitatif, en référence aux dessins annexés, sur lesquels :
- la figure 1 est une vue schématique en coupe horizontale axiale du feu de signalisation du véhicule selon l'invention ;
- la figure 2 représente une vue en perspective d'une partie de la face avant gauche d'un véhicule automobile équipée du feu de signalisation de la figure 1 ; et
- la figure 3 est une vue semblable à la figure 2, mais prise depuis un angle de visibilité géométrique de 45° côté interne par rapport à l'axe optique du feu de signalisation de la figure 1.

### Description détaillée d'un mode préféré de réalisation

Le feu de signalisation 1 représenté sur les figures est un feu indicateur de direction destiné à être monté à l'avant gauche d'un véhicule automobile de manière contigüe à sa calandre 2.

Celui-ci comporte un boîtier 10 ouvert à l'avant, un écran de couverture 20 refermant de manière étanche le boîtier 10 et une source lumineuse 30 logée dans la cavité délimitée par le boîtier 10 et l'écran de couverture 20.

Le boîtier 10 est de préférence venu de moulage d'une seule pièce à partir d'un polymère thermoplastique tel que par exemple un acrylonitrile butadiène styrène (ABS). La face interne 12 concave et réfléchissante de la paroi arrière 11 de ce boîtier 10 constitue un réflecteur destiné à renvoyer en direction de l'écran 20 le flux lumineux qu'il reçoit en provenance de la source lumineuse 30.

Cette source lumineuse 30 est ici constituée par une ampoule à filament incandescent de type P21W montée à l'arrière du boîtier 10 par l'intermédiaire d'une douille de montage non représentée insérée au travers d'une ouverture ménagée dans la paroi arrière réfléchissante 11 de ce boîtier 10.

Comme illustré par les figures, l'écran de couverture 20 présente un galbe prononcé par rapport à un plan vertical transversal à l'axe optique x-x du feu indicateur de direction 1, cet axe optique x-x étant lui-même parallèle à l'axe longitudinal du véhicule.

L'écran 20 comporte une paroi principale 21 transparente lisse destinée à assurer la transmission vers l'avant du véhicule de la majeure partie du flux lumineux émis par la source 30, de sorte à permettre au feu indicateur de direction 1 d'atteindre les niveaux élevés d'intensité lumineuse imposés par la réglementation pour l'ensemble des points référence situés dans la zone centrale de la grille photométrique.

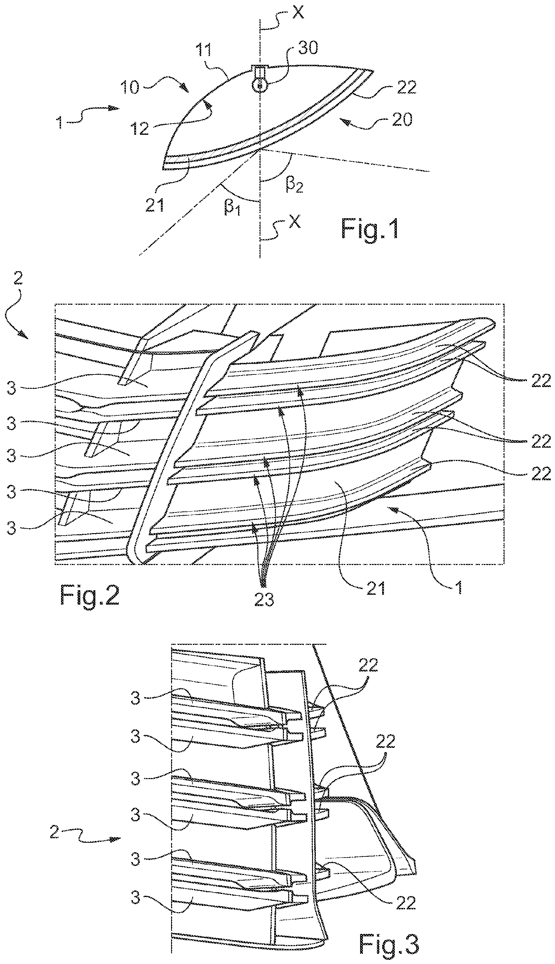

A contrario, du fait de son galbe important et de son positionnement en retrait vis-à-vis de la calandre 2 du véhicule dans la configuration montée du feu indicateur de direction 1 (voir figure 2), cette paroi principale lisse 21 de l'écran 20 ne permet pas au feu 1 de respecter les angles de visibilité géométriques horizontaux côté interne β₁ et externe β₂ imposés par la réglementation, et en particulier celui côté interne β₁ de 45° par rapport à l'axe optique x-x (figure 1).

Selon l'invention, l'écran 20 comporte donc également une pluralité de barreaux optiques 22, ici au nombre de cinq, saillant depuis la face externe de la paroi principale 21 selon un plan sensiblement horizontal et s'étendant sur l'ensemble de la longueur de l'écran 20 (figures 1 et 2).

On remarquera également que les barreaux 22 s'étendent dans le prolongement des barreaux 3 de la calandre 2 afin d'offrir une certaine continuité visuelle entre cette calandre 2 et le feu indicateur de direction 1, favorisant l'intégration de ce feu 1 à la face avant du véhicule.

Comme illustré sur la figure 3, la largeur des barreaux 22 est prédéterminée de sorte que dans la configuration montée du feu indicateur de direction 1, une portion de ces derniers soit visible depuis l'angle de visibilité géométrique interne β₁.

En outre, la tranche avant 23 de chaque barreau 22 est sablée afin d'assurer une diffusion des rayons lumineux traversant ce barreau sur une plage angulaire horizontale étendue, de sorte notamment que le seuil minimum d'intensité lumineuse réglementaire parvienne jusqu'aux points de la grille photométrique situés au niveau des angles extrêmes de visibilité géométrique (et en particulier, jusqu'à ceux situés au niveau de l'angle β₁ de visibilité géométrique côté interne). Ce sablage des tranches avant 23 a également tendance à leur donner un effet mat renforçant la continuité visuelle avec la calandre 2 du véhicule.

L'écran de couverture 20 est de préférence venu de moulage d'une seule pièce à partir d'un polymère thermoplastique transparent tel qu'un polycarbonate ou un poly-méthacrylate de méthyle (PMMA).

Selon des variantes de réalisation de l'invention non représentées, le feu de signalisation n'est pas un indicateur de direction mais un feu de position ou bien encore un feu de circulation diurne.

Selon d'autres variantes de réalisation non représentées et afin de renforcer encore la continuité visuelle entre la calandre du véhicule et le feu de signalisation, les faces supérieures et/ou inférieures des barreaux de l'écran de couverture sont revêtues d'une couche de teinture présentant un rendu proche de celui des éléments correspondants de la calandre (par exemple, gris métallisé ou noir).

Selon encore d'autres variantes de réalisation non représentées, et toujours dans le but d'améliorer la continuité visuelle entre la calandre du véhicule et le feu de signalisation, certaines zones de la paroi principale situées entre deux barreaux de l'écran sont également revêtues d'une couche de teinture.

Selon encore d'autres variantes de réalisation non représentées, les barreaux de l'écran sont réalisés dans un polymère thermoplastique translucide teinté (par exemple, en noir). L'écran est alors de préférence obtenu via un procédé de moulage bi-injection d'un premier polymère thermoplastique transparent formant la paroi principale et d'un second polymère thermoplastique translucide teinté (par exemple en noir) formant les barreaux.

Selon encore d'autres variantes de réalisation non représentées, la source lumineuse n'est pas constituée par une ampoule à filament incandescent mais par une pluralité de diodes électroluminescentes (LEDS).

D'une manière générale, on rappelle que la présente invention ne se limite pas aux formes de réalisation décrites et représentées, mais qu'elle englobe toutes les variantes d'exécution à la portée de l'homme du métier.

## Revendications

1. Véhicule automobile comportant une calandre (2) dotée d'une pluralité de barreaux (3) ainsi qu'au moins un feu de signalisation comprenant un boîtier (10) ouvert à l'avant, un écran de couverture (20) galbé refermant ledit boîtier (10) et une source lumineuse (30) logée dans la cavité délimitée par ledit boîtier (10) et ledit écran de couverture (20) ;
ledit écran de couverture (20) comportant une paroi principale transparente lisse (21) destinée à assurer la transmission vers l'avant dudit véhicule de la majeure partie du flux lumineux émis par ladite source (30), ainsi qu'une pluralité de barreaux optiques (22) saillant depuis la face externe de ladite paroi principale (21) et selon un plan sensiblement horizontal, lesdits barreaux optiques (22) de l'écran de couverture (20) s'étendent dans le prolongement desdits barreaux (3) de la calandre (2, **caractérisé en ce que** lesdits barreaux optiques (22) de l'écran de couverture (20) sont réalisés dans un polymère thermoplastique translucide teinté ; ledit écran de couverture (20) étant obtenu via un procédé de moulage bi-injection d'un premier polymère thermoplastique transparent formant ladite paroi principale (21) et d'un second polymère thermoplastique translucide teinté formant lesdits barreaux optiques (22), et **en ce que** la tranche avant (23) desdits barreaux optiques (22) est en outre sablée afin d'assurer la diffusion des rayons lumineux les traversant sur une plage angulaire horizontale étendue,.

2. Véhicule automobile selon la revendication 1, **caractérisé en ce que** lesdits barreaux optiques (22) s'étendent sur l'ensemble de la longueur dudit écran de couverture (20).

3. Véhicule automobile selon l'une des revendications 1 ou 2, **caractérisé en ce que** ledit écran de couverture (20) est venu de moulage d'une seule pièce à partir d'un polymère thermoplastique transparent.

4. Véhicule automobile selon la revendication 3, **caractérisé en ce que** les faces supérieures et/ou inférieures desdits barreaux optiques (22) de l'écran de couverture (20) sont revêtues d'une couche de teinture.

5. Véhicule automobile selon la revendication 4, **caractérisé en ce que** certaines zones de ladite paroi principale (21) situées entre deux dits barreaux optiques (22) de l'écran de couverture sont revêtues d'une couche de teinture.

6. Véhicule automobile selon l'une des revendications 1 à 5, **caractérisé en ce que** le feu de signalisation est un feu indicateur de direction.

7. Véhicule automobile selon la revendication 6, **caractérisé en ce que** la largeur desdits barreaux optiques (22) de l'écran de couverture (20) est prédéterminée de sorte qu'une portion desdits barreaux optiques (22) demeure visible depuis l'angle de visibilité géométrique réglementaire interne (β₁) dudit feu de signalisation (1).

## Patentansprüche

1. Kraftfahrzeug mit einem mit mehreren Stäben (3) versehenen Kühlergrill (2) und mindestens einer Signalleuchte, die ein nach vorne offenes Gehäuse (10), eine das Gehäuse (10) verschließende, gewölbte Abdeckscheibe (20) und eine in dem von dem Gehäuse (10) und der Abdeckscheibe (20) begrenzten Hohlraum untergebrachte Lichtquelle (30) aufweist;
wobei der Abdeckschirm (20) eine glatte, transparente Hauptwand (21) umfasst, die dazu bestimmt ist, die Übertragung des größten Teils des von der Quelle (30) emittierten Lichtstroms zur Vorderseite des Fahrzeugs hin zu gewährleisten, sowie eine Vielzahl von optischen Stäben (22), die von der Außenfläche der Hauptwand (21) und in einer im Wesentlichen horizontalen Ebene vorstehen, die optischen Stege (22) des Abdeckschirms (20) sich in der Verlängerung der Stege (3) des Gitters (2) erstrecken, **dadurch gekennzeichnet, dass** die optischen Stege (22) des Abdeckschirms (20) aus einem eingefärbten durchscheinenden thermoplastischen Polymer hergestellt sind; die Abdeckscheibe (20) durch ein Bi-Spritzgussverfahren aus einem ersten transparenten thermoplastischen Polymer, das die Hauptwand (21) bildet, und aus einem zweiten getönten lichtdurchlässigen thermoplastischen Polymer, das die optischen Stege (22) bildet, erhalten wird, und dass die Vorderkante (23) der optischen Stege (22) zusätzlich sandgestrahlt wird, um die Streuung der durch sie hindurchtretenden Lichtstrahlen über einen erweiterten horizontalen Winkelbereich zu gewährleisten.

2. Kraftfahrzeug nach Anspruch 1, **dadurch gekennzeichnet, dass** sich die optischen Stäbe (22) über die gesamte Länge der Abdeckscheibe (20) erstrecken.

3. Kraftfahrzeug nach einem der Ansprüche 1 oder 2, **dadurch gekennzeichnet, dass** die Abdeckscheibe (20) in einem Stück aus einem transparenten thermoplastischen Polymer geformt ist.

4. Kraftfahrzeug nach Anspruch 3, **dadurch gekennzeichnet, dass** die oberen und/oder unteren Flächen der optischen Stäbe (22) des Abdeckschirms (20) mit einer Farbschicht beschichtet sind.

5. Kraftfahrzeug nach Anspruch 4, **dadurch gekennzeichnet, dass** bestimmte Bereiche der Hauptwand (21), die sich zwischen zwei der optischen Stäbe (22) des Abdeckschirms befinden, mit einer Farbstoffschicht beschichtet sind.

6. Kraftfahrzeug nach einem der Ansprüche 1 bis 5, **dadurch gekennzeichnet, dass** die Signalleuchte eine Fahrtrichtungsanzeigerleuchte ist.

7. Kraftfahrzeug nach Anspruch 6, **dadurch gekennzeichnet, dass** die Breite der Lichtleitstäbe (22) der Abdeckscheibe (20) so vorgegeben ist, dass ein Teil der Lichtleitstäbe (22) unter dem inneren regelgeometrischen Sichtbarkeitswinkel (β1) des Signallichtes (1) sichtbar bleibt.

## Claims

1. Motor vehicle comprising a grille (2) provided with a plurality of bars (3) as well as at least one signal light comprising a housing (10) open at the front, a curved cover screen (20) closing said housing (10) and a light source (30) housed in the cavity delimited by said housing (10) and said cover screen (20) ;
said cover screen (20) comprising a smooth transparent main wall (21) intended to ensure the transmission towards the front of said vehicle of the major part of the luminous flux emitted by said source (30), as well as a plurality of optical rods (22) projecting from the external face of said main wall (21) and in a substantially horizontal plane, said optical rods (22) of the cover screen (20) extend in the extension of said rods (3) of the grille (2), **characterized in that** said optical rods (22) of the cover screen (20) are made of a dyed translucent thermoplastic polymer; said cover screen (20) being obtained by a bi-injection moulding process of a first transparent thermoplastic polymer forming said main wall (21) and of a second tinted translucent thermoplastic polymer forming said optical rods (22), and **in that** the front edge (23) of said optical rods (22) is also sandblasted in order to ensure the diffusion of the light rays passing through them over an extended horizontal angular range.

2. Motor vehicle according to claim 1, **characterized in that** said optical rods (22) extend over the entire length of said cover screen (20).

3. A motor vehicle according to one of claims 1 or 2, **characterized in that** said cover screen (20) is integrally molded from a transparent thermoplastic polymer.

4. Motor vehicle according to claim 3, **characterized in that** the upper and/or lower faces of said optical rods (22) of the covering screen (20) are coated with a layer of dye.

5. Motor vehicle according to claim 4, **characterized in that** certain areas of said main wall (21) located between two said optical rods (22) of the covering screen are coated with a layer of dye.

6. Motor vehicle according to one of claims 1 to 5, **characterized in that** the traffic light is a direction indicator light.

7. Motor vehicle according to claim 6, **characterized in that** the width of said optical rods (22) of the cover screen (20) is predetermined so that a portion of said optical rods (22) remains visible from the internal regulatory geometric angle of visibility (β1) of said signal light (1).
